(19) Europäisches Patentamt
European Patent Office
Office européen des brevets

(11) **EP 4 685 024 A1**

(12) **EUROPEAN PATENT APPLICATION**
published in accordance with Art. 153(4) EPC

(43) Date of publication:
**28.01.2026 Bulletin 2026/05**

(21) Application number: **24774461.8**

(22) Date of filing: **01.02.2024**

(51) International Patent Classification (IPC):
**B60W 30/02** (2012.01)   **B60L 15/20** (2006.01)

(52) Cooperative Patent Classification (CPC):
**B60L 15/20; B60W 30/02**

(86) International application number:
**PCT/JP2024/003236**

(87) International publication number:
**WO 2024/195315 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.03.2023 JP 2023044631**

(71) Applicant: **DENSO CORPORATION**
**Kariya-city, Aichi 448-8661 (JP)**

(72) Inventors:
• **KAMIO, Shigeru**
  **Kariya-city, Aichi 448-8661 (JP)**
• **KAWAI, Keisuke**
  **Kariya-city, Aichi 448-8661 (JP)**
• **LIU, Haibo**
  **Kariya-city, Aichi 448-8661 (JP)**
• **KUBOTA, Masaru**
  **Kariya-city, Aichi 448-8661 (JP)**
• **ABE, Mitsuyasu**
  **Nisshin-shi, Aichi 470-0111 (JP)**

(74) Representative: **TBK**
**Bavariaring 4-6**
**80336 München (DE)**

(54) **CONTROL DEVICE AND PROGRAM**

(57)     An EVC 10 includes: a coefficient estimation unit 105 that estimates a maximum friction coefficient of a drive wheel with respect to a front road surface when a mobile body causes the drive wheel to rotate and travels on the road surface; a limit calculation unit 102 that calculates a torque upper limit for driving the drive wheel according to the estimated maximum friction coefficient; and a target-setting unit 103 that sets a target torque to drive the drive wheel so as not to exceed the torque upper limit.

FIG.1

**Description**

[Cross Reference to Related Applications]

This application claims the benefit of the priority to Japanese Patent Application No. 2023-044631 filed March 20, 2023, the entire contents of which are incorporated herein by reference.

[Technical Field]

The present disclosure relates to a control device of a mobile body, and a program.

[Background Art]

As a control device for a vehicle, which is a mobile body, a slip control device described in PTL 1 below is known. In the slip control device described in PTL 1 below, in a case where it is determined that a slip is occurring in a drive wheel, a road surface friction coefficient $\mu$ is simply estimated from the driving torque and drive wheel acceleration.

[Citation List]

[Patent Literature]

PTL 1: JP H02-19622 A

[Summary of the Invention]

In a conventional method of estimating the road surface friction coefficient $\mu$, because the road surface friction coefficient $\mu$ is estimated at a timing in which a large slip has occurred, the road surface friction coefficient $\mu$ cannot be estimated for minor slips, and the frequency of estimating the road surface friction coefficient $\mu$ becomes very low.

In particular, because the relationship between the road surface friction coefficient $\mu$ and a slip ratio s varies depending on the road surface conditions, if a maximum friction coefficient $\mu p$, which is the maximum value of the road surface friction coefficient $\mu$, can be estimated, it becomes possible to execute drive control such that the slip ratio s corresponds to $\mu p$, which enables optimal acceleration and stability according to the road surface friction coefficient $\mu$ to be obtained.

An object of the present disclosure is to provide a control device and a program that are capable of drive wheel control using the maximum friction coefficient $\mu p$.

The present disclosure provides a control device comprising: a coefficient estimation unit that estimates a maximum friction coefficient of a drive wheel with respect to a road surface when a mobile body causes the drive wheel to rotate and travels on the road surface; a limit calculation unit that calculates a torque upper limit that drives the drive wheel according to the estimated maximum friction coefficient; and a target-setting unit that sets a target torque to drive the drive wheel so as not to exceed the torque upper limit.

[Brief Description of the Drawings]

Fig. 1 is a configuration diagram for describing the configuration of a vehicle equipped with an EVC according to the present embodiment.

Fig. 2 is a block configuration diagram for describing the functional configuration of the EVC according to the present embodiment.

Fig. 3 is a flowchart for describing the operation of the EVC shown in Fig. 2.

Fig. 4 is a flowchart for describing the operation of the EVC shown in Fig. 2.

Fig. 5 is a flowchart for describing the operation of the EVC shown in Fig. 2.

Fig. 6 is a flowchart for describing the operation of the EVC shown in Fig. 2.

Fig. 7 is a flowchart for describing the operation of the EVC shown in Fig. 2.

Fig. 8 is a flowchart for describing the operation of the EVC shown in Fig. 2.

Fig. 9 is an example of a TsMAX-$\mu p$ characteristic diagram referenced when describing the operation of the EVC shown in Fig. 2.

Fig. 10 is an example of a Tfil-$\mu p$ characteristic diagram referenced when describing the operation of the EVC shown in Fig. 2.

Fig. 11 is a flowchart for describing the operation of the EVC shown in Fig. 2.

Fig. 12 is a flowchart for describing the operation of the EVC shown in Fig. 2.

Fig. 13 is a flowchart for describing the operation of the EVC shown in Fig. 2.

Fig. 14 is an example of a $\mu$-s characteristic diagram referenced when describing the operation of the EVC shown in Fig. 2.

Fig. 15 is an example of a $\mu$-ofst characteristic diagram referenced when describing the operation of the EVC shown in Fig. 2.

Fig. 16 is a timing chart referenced when describing the operation of the EVC shown in Fig. 2.

Fig. 17 is a flowchart for describing the operation of the EVC shown in Fig. 2.

[Description of the Embodiments]

Hereinafter, the present embodiment will be described with reference to the accompanying drawings. In order to allow the description to be easily understood, the same reference signs are given to the extent possible to the same components in each drawing, and duplicate descriptions will be omitted.

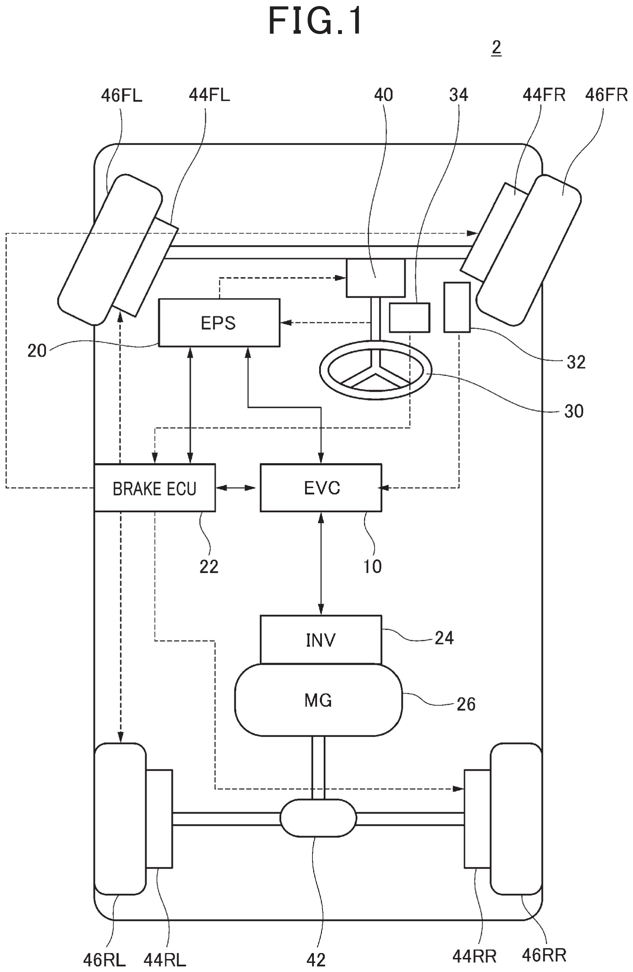

As shown in Fig. 1, a vehicle 2 includes an EVC (Electric Vehicle Controller) 10, an EPS (Electric Power Steering) 20, a brake ECU (Electric Control Unit) 22, an inverter 24, a motor-generator 26, a steering wheel 30, an accelerator pedal 32, a brake pedal 34, an EPS actuator 40, a differential gear 42, a right front wheel brake 44FR, a left front wheel brake 44FL, a right rear wheel brake 44RR, a left rear wheel brake 44RL, a right front wheel 46FR, a left front wheel 46FL, a right rear wheel 46RR, and a left rear wheel 46RL.

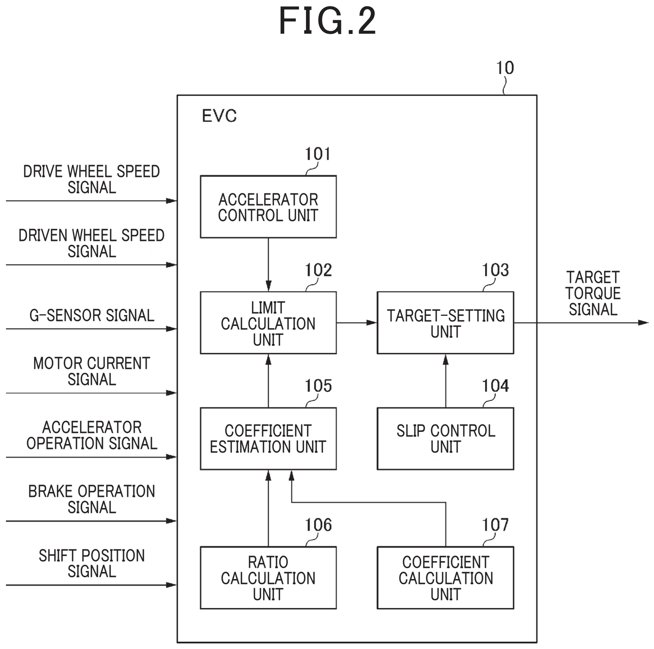

The right front wheel 46FR and the left front wheel 46FL are steered wheels that determine the traveling direction of the vehicle 2. The right front wheel 46FR and the left front wheel 46FL are driven wheels to which a driving force is not transmitted. The right front wheel 46FR is provided at the right front of the vehicle 2. The left front wheel 46FL is provided at the left front of the vehicle 2. "Front" refers to the forward direction of the vehicle 2, which is the upward direction in Fig. 2.

The right front wheel brake 44FR is provided on the right front wheel 46FR. The right front wheel brake 44FR operates based on a braking signal output from the brake ECU 22, and applies a braking force to the right front wheel 46FR. The left front wheel brake 44FL is provided on the left front wheel 46FL. The left front wheel brake 44FL operates based on a braking signal output from the brake ECU 22, and applies a braking force to the left front wheel 46FL.

The right front wheel 46FR and the left front wheel 46FL are configured to change angles to the left and right in synchronization with each other. The right front wheel 46FR and the left front wheel 46FL are steered by the EPS actuator 40. The EPS actuator 40 is configured so as to perform a turning operation based on a steering signal output from the EPS 20. A steering angle signal is input to the EPS 20. The steering angle signal is a signal output by operating the steering wheel 30. The steering angle signal is a signal that specifies the steering angle intended by the driver. A control signal is output from the EVC 10 to the EPS 20. A braking signal is output from the brake ECU to the EPS 20. The EPS 20 calculates a steering signal by appropriately computing the steering angle signal, the control signal, and the braking signal, and outputs the steering signal to the EPS actuator 40. The EPS 20 outputs the steering signal to the EVC 10 and the brake ECU 22. The EPS 20 is a control device for outputting the steering signal to the EPS actuator 40. The EPS 20 is a computer having components such as an interface for transmitting and receiving signals, a memory that stores information, and a CPU that executes computations.

The right rear wheel 46RR and the left rear wheel 46RL are drive wheels that drive the vehicle 2. The right rear wheel 46RR is provided at the right rear of the vehicle 2. The left rear wheel 46RL is provided at the left rear of the vehicle 2. "Rear" refers to the reverse direction of the vehicle 2, which is the downward direction in Fig. 1.

The right rear wheel brake 44RR is provided on the right rear wheel 46RR. The right rear wheel brake 44RR operates based on a braking signal output from the brake ECU 22, and applies a braking force to the right rear wheel 46RR. The left rear wheel brake 44RL is provided on the left rear wheel 46RL. The left rear wheel brake 44RL operates based on a braking signal output from the brake ECU 22, and applies a braking force to the left rear wheel 46RL.

The brake ECU 22 is a control device for outputting braking signals to each brake to generate a desired braking force. The brake ECU 22 is a computer having components such as an interface for transmitting and receiving signals, a memory that stores information, and a CPU that executes computations. A brake operation signal, which is output by operating the brake pedal 34, is input to the brake ECU 22. A control signal is output from the EVC 10 to the brake ECU 22. A steering signal is output from the EPS 20 to the brake ECU 22. The brake ECU 22 calculates a braking signal by appropriately computing the brake operation signal, the control signal, and the steering signal. The brake ECU 22 outputs the braking signal to the right front wheel brake 44FR, the left front wheel brake 44FL, the right rear wheel brake 44RR, and the left rear wheel brake 44RL.

The motor-generator 26 functions as a motor that generates driving force, and also as a generator that recovers a regeneration energy. The motor-generator 26 is rotationally driven by an alternating current output from the inverter 24 to generate a driving torque. The generated driving torque is distributed and transmitted to the right rear wheel 46RR and the left rear wheel 46RL via the differential gear 42.

The inverter 24 converts a direct current supplied from a battery (not shown) into an alternating current, and supplies the alternating current to the motor-generator 26 at a desired frequency and voltage. The inverter 24 supplies electric power corresponding to the driving torque generated by the motor-generator 26 based on a target torque signal output from the EVC 10.

The EVC 10 is a control device that provides integrated control of the vehicle 2. The EVC 10 is a computer having components such as an interface for transmitting and receiving signals, a memory that stores information, and a CPU that executes computations. An accelerator operation signal corresponding to the operation of the accelerator pedal 32 is input to the EVC 10. A steering signal from the EPS 20 is input to the EVC 10. A braking signal from the brake ECU 22 is input to the EVC 10. A motor current signal from the inverter 24 is input to the EVC 10. A shift position signal corresponding to the operation of a shift lever (not shown) is input to the EVC 10. The shift position signal includes, for example, a D signal instructing forward movement and an R signal instructing reverse movement.

Next, the functional configuration of the EVC 10 as a control device will be described with reference to Fig. 2. A drive wheel speed signal, a driven wheel speed signal, a G-sensor signal, a motor current signal, an accelerator operation signal, a brake operation signal, and a shift position signal are input to the EVC 10. The drive wheel speed signal includes a signal indicating the rotational speed of the right rear wheel 46RR and a signal indicating the rotational speed of the left rear wheel 46RL. The driven wheel speed signal includes a signal indicating the rotational speed of the right front wheel 46FR and a signal indicating the rotational speed of the left front wheel 46FL. The G-sensor signal is a signal output by a G-sensor (not shown) and indicates the acceleration acting on the vehicle 2. The motor current signal is a signal indicating the current value flowing through the motor-generator 26.

The EVC 10 includes, as functional components, an accelerator control unit 101, a limit calculation unit 102, a target-setting unit 103, a slip control unit 104, a coefficient estimation unit 105, a ratio calculation unit 106, and a coefficient calculation unit 107.

The accelerator control unit 101 is a part that calculates an accelerator requested torque Ta based on the various signals input to the EVC 10. For example, the accelerator control unit 101 calculates the accelerator requested torque Ta, which specifies a driving torque or a braking torque, based on the accelerator operation signal or the brake operation signal. For example, the accelerator control unit 101 calculates the accelerator requested torque Ta, which specifies forward or reverse movement, based on the shift position signal. The accelerator control unit 101 outputs the calculated accelerator requested torque Ta to the limit calculation unit 102.

The limit calculation unit 102 is a part that performs upper limit processing with respect to the accelerator requested torque Ta that specifies the driving torque or the braking torque. The limit calculation unit 102 calculates a slip limit torque TsMAX, which is a torque upper limit that drives the drive wheels according to the maximum friction coefficient μp. The limit calculation unit 102 outputs the calculated slip limit torque TsMAX to the target-setting unit 103.

The target-setting unit 103 is a part that sets a target torque that drives the drive wheels so as not to exceed the slip limit torque TsMAX, which is the torque upper limit. The target-setting unit 103 compares the slip limit torque TsMAX with a slip torque Ts output by the slip control unit 104, and sets the smaller of the two values as the target torque.

The target-setting unit 103 applies a driving/braking torque, which is a torque acting in a driving direction or a braking direction, to the right rear wheel 46RR and the left rear wheel 46RL serving as the drive wheels provided on the vehicle 2, which is a mobile body. The target-setting unit 103 outputs a target torque signal specifying the driving/braking torque to the inverter 24 and the brake ECU 22. The target-setting unit 103 sets the smallest torque among the slip limit torque TsMAX and the slip torque Ts as the target torque. The braking torque acting in the braking direction can be applied not only to the drive wheels but also to the driven wheels. The braking torque acting in the braking direction may be applied as a regenerative braking torque by the motor-generator 26. The braking torque acting in the braking direction may be applied as a friction braking torque by the right front wheel brake 44FR, the left front wheel brake 44FL, the right rear wheel brake 44RR, and the left rear wheel brake 44RL.

The slip control unit 104 is a part that calculates the slip torque Ts. The method of calculating the slip torque Ts will be described in detail later.

The ratio calculation unit 106 calculates a slip ratio s, which indicates the slipping state of the right rear wheel 46RR and the left rear wheel 46RL, which are serving as the drive wheels, with respect to the road surface on which the vehicle 2, which is a mobile body, is traveling.

The coefficient calculation unit 107 calculates a friction coefficient μ of the right rear wheel 46RR and the left rear wheel 46RL, which are serving as the drive wheels, with respect to the road surface, using information including the driving/braking torque and the drive wheel speed of the drive wheels.

The coefficient estimation unit 105 classifies combination data of the slip ratio s calculated by the ratio calculation unit 106, and the friction coefficient μ calculated by the coefficient calculation unit 107 at the same timing as the slip ratio, into either selected data or non-selected data. The coefficient estimation unit 105 estimates the maximum friction coefficient μp, which is a local maximum of the friction coefficient μ, using a plurality of selected data.

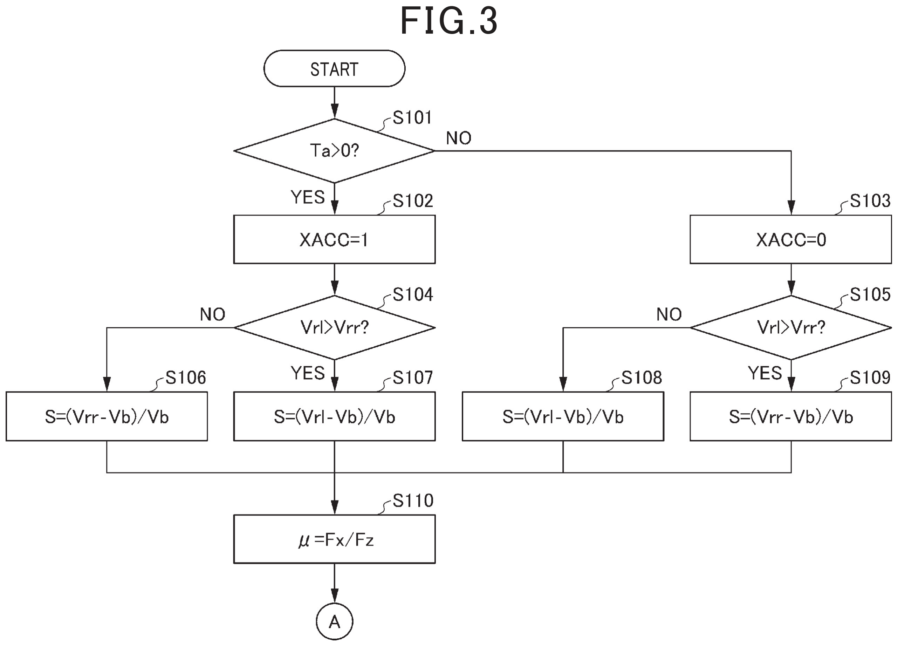

Next, a method of estimating the maximum friction coefficient μp will be described with reference to Figs. 3, 4, 5, and 6. In step S101 in Fig. 3, the accelerator control unit 101 calculates the accelerator requested torque Ta. The accelerator control unit 101 determines whether the calculated accelerator requested torque Ta is greater than 0. When the accelerator requested torque Ta is greater than 0 (step S101: YES), the state is determined to be an acceleration state, and the process proceeds to step S102. When the accelerator requested torque is not greater than 0 (step S101: NO), the state is determined to be a deceleration state, and the process proceeds to step S103.

In step S102, the limit calculation unit 102 sets an acceleration/deceleration determination flag XACC to 1. When the processing of step S102 is completed, the process proceeds to step S104. In step S103, the limit calculation unit 102 sets the acceleration/deceleration determination flag XACC to 0. When the processing of step S103 is completed, the process proceeds to step S105.

In step S104, the ratio calculation unit 106 compares the wheel speed Vrr of the right rear wheel 46RR and the wheel speed Vrl of the left rear wheel 46RL. The ratio calculation unit 106 determines which of the right rear wheel 46RR side and the left rear wheel 46RL side is in a low-$\mu$ state. Since step S104 is a determination based on an acceleration state, the side with the higher wheel speed is in the low-$\mu$ state. When the wheel speed Vrl is greater than the wheel speed Vrr (step S104: YES), the process proceeds to step S107. When the wheel speed Vrl is not greater than the wheel speed Vrr (step S104: NO), the process proceeds to step S106.

In step S106, the ratio calculation unit 106 calculates the slip ratio s using the following formula (f001).

$$s = (Vrr - Vb) / Vb \quad (f001)$$

Vb is the vehicle body speed, and can be calculated by a known method. The driven wheel speed V may be used as the vehicle body speed Vb.

In step S107, the ratio calculation unit 106 calculates the slip ratio s using the following formula (f002).

$$s = (Vrl - Vb) / Vb \quad (f002)$$

In step S105, the ratio calculation unit 106 compares the wheel speed Vrr of the right rear wheel 46RR and the wheel speed Vrl of the left rear wheel 46RL. The ratio calculation unit 106 determines which of the right rear wheel 46RR side and the left rear wheel 46RL side is in a low-$\mu$ state. Since step S103 is a determination based on a deceleration state, the side with the lower wheel speed is in the low-$\mu$ state. When the wheel speed Vrl is greater than the wheel speed Vrr (step S105: YES), the process proceeds to step S109. When the wheel speed Vrl is not greater than the wheel speed Vrr (step S105: NO), the process proceeds to step S108.

In step S108, the ratio calculation unit 106 calculates the slip ratio s using the following formula (f002).

$$s = (Vrl - Vb) / Vb \quad (f002)$$

In step S109, the ratio calculation unit 106 calculates the slip ratio s using the following formula (f001).

$$s = (Vrr - Vb) / Vb \quad (f001)$$

When the processing of step S106, step S107, step S108, and step S109 is completed, and the slip ratio s has been calculated, the process proceeds to step S110.

In step S110, the coefficient calculation unit 107 calculates the friction coefficient $\mu$. The friction coefficient $\mu$ is obtained by dividing the driving force Fx by the tire load Fz. The driving force Fx is calculated by the following formula (f003).

[Math. 1]

$$F_x = M\frac{dV}{dt} - F_r = \frac{\frac{T_{MG}}{2} - T_L}{r} - F_r \quad (f003)$$

M is the vehicle body weight. V is the driven wheel speed. Fr is the vehicle R/L (Road Load), which is the resistance experienced when traveling at a constant speed on a paved, level road. Fr is calculated by a map lookup according to the vehicle body speed Vb. $T_{MG}$ is the driving torque generated by the motor-generator 26. $T_{MG}$ is estimated from the motor current, and can be used in computations after being passed through a low-pass filter having a time constant that simulates the MG torque delay. $T_{MG}$ is distributed to the left and right wheels by the differential gear 42. $T_L$ is the load or loss related to the motor-generator 26. $T_L$ is calculated by a map lookup according to the drive wheel speed Vd. r is the tire radius.

The tire load Fz is calculated by the following formula (f004).

[Math. 2]

$$F_Z = M\frac{l_r}{L} - \frac{h}{L}\frac{M}{g}\frac{dV}{dt} \quad (f004)$$

Ir is the distance from the center of gravity of the vehicle 2 to the center of the rear wheels. L is the inter-wheel distance between the front and rear wheels. h is the height of the center of gravity of the vehicle 2. The friction coefficient $\mu$ is calculated by the following formula (f005).

[Math. 3]

$$\mu = \frac{F_x}{F_Z} - \frac{\frac{1}{r}\left(T_{MG} - J\frac{d\omega}{dt}\right) + F_r}{M\frac{l_r}{L} - \frac{h}{L}\frac{M}{g}\frac{dV}{dt}} \quad (f005)$$

J is the inertia around the drive wheel. $\omega$ is the drive wheel speed. The drive wheel acceleration can be used in computations after being passed through a low-pass filter with a time constant sufficient to remove noise. Note that the friction coefficient $\mu$ may also be obtained from a mapping between the driving torque $T_{MG}$ generated by the motor-generator 26 and the drive wheel acceleration $\Delta$Vd.

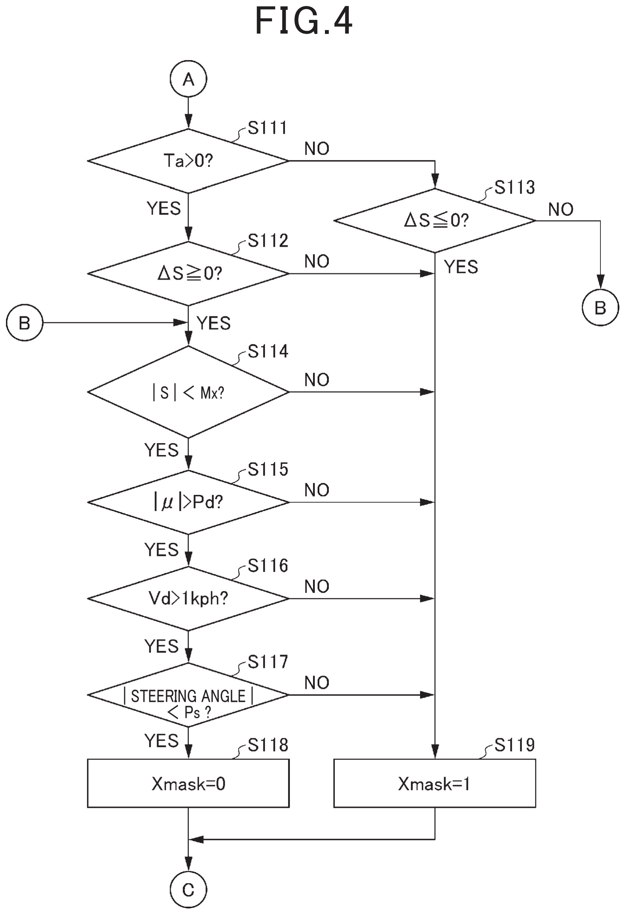

When the friction coefficient $\mu$ is calculated in step S110, the process proceeds to step S111 in Fig. 4. The description will be continued with reference to Fig. 4.

In step S111, the accelerator control unit 101 calculates the accelerator requested torque Ta. The accelerator control unit 101 determines whether the calculated accelerator requested torque Ta is greater than 0. When the accelerator requested torque Ta is greater than 0 (step S111: YES), the state is determined to be an acceleration state, and the process proceeds to step S112. When the accelerator requested torque Ta is not greater than 0 (step S111: NO), the state is determined to be a deceleration state, and the process proceeds to step S113.

In step S112, the ratio calculation unit 106 determines whether the slip ratio rate of change $\Delta s$ is 0 or more. When slip ratio rate of change $\Delta s$ is greater than or equal to 0 (step S112: YES), the process proceeds to step S114. When slip ratio rate of change $\Delta s$ is less than 0 (step S112: NO), the process proceeds to step S119. Since the change in the slip ratio has hysteresis between the acceleration side and the deceleration side, the determination in step S112 is made with hysteresis.

In step S113, the ratio calculation unit 106 determines whether the slip ratio rate of change $\Delta s$ is 0 or less. When slip ratio rate of change $\Delta s$ is less than or equal to 0 (step S113: YES), the process proceeds to step S119. When slip ratio rate of change $\Delta s$ is greater than 0 (step S113: NO), the process proceeds to step S114. Since the change in the slip ratio has hysteresis between the acceleration side and the deceleration side, the determination in step S113 is made with hysteresis.

In step S114, the ratio calculation unit 106 determines whether the absolute value of the slip ratio s is less than a predetermined value Mx. When |slip ratio s| is less than Mx (step S114: YES), the processing proceeds to step S115. When |slip ratio s| is not less than Mx (step S114: NO), the process proceeds to step S119.

In step S115, the coefficient calculation unit 107 determines whether the friction coefficient $\mu$ is near 0. When $|\mu|$ is greater than Pd (step S115: YES), the processing proceeds to step S116. When $|\mu|$ is not greater than Pd (step S115: NO), the process proceeds to step S119. The determination value Pd may be 0, or a value near 0.

In step S116, the accelerator control unit 101 determines whether the absolute value of the drive wheel speed Vd is greater than 1 kph. When |Vd| is greater than 1 kph (step S116: YES), the processing proceeds to step S117. When |Vd| is not greater than 1 kph (step S116: NO), the process proceeds to step S119. Note that, if the drive wheel speed Vd can be accurately measured using a resolver rotation sensor of the motor-generator, the processing of step S116 may be omitted.

In step S117, it is determined whether the steering angle is in a turning state. When |steering angle| is less than Ps (step S117: YES), the processing proceeds to step S118. When |steering angle| is not less than Ps (step S117: NO), the process proceeds to step S119. The determination value Ps is set to a value that determines whether the steering angle is in a turning state or a straight travel state. Note that, if the estimation is performed using lateral force correction, the processing of step S117 may be omitted.

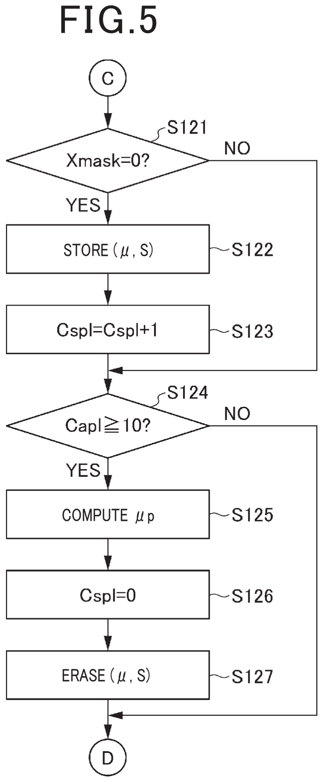

In step S118, the coefficient estimation unit 105 sets a mask flag Xmask of the combination data ($\mu$, s) of the friction coefficient $\mu$ and the slip ratio s to 0. In step S119, the coefficient estimation unit 105 sets the mask flag Xmask of the combination data ($\mu$, s) of the friction coefficient $\mu$ and the slip ratio s to 1. When the mask flag setting in step S118 and step S119 is completed, the process proceeds to step S121 in Fig. 5. The description will be continued with reference to Fig. 5.

In step S121, the coefficient estimation unit 105 determines whether the mask flag Xmask of the combination data ($\mu$, s) of the friction coefficient $\mu$ and the slip ratio s is 0. When Xmask is equal to 0 (step S121: YES), the process proceeds to step S122. When Xmask is not equal to 0 (step S121: NO), the process proceeds to step S124.

In step S122, the coefficient estimation unit 105 stores the combination data ($\mu$, s) which has the mask flag Xmask set to 0. The combination data ($\mu$, s) which has the mask flag Xmask set to 0 becomes selected data that is stored. The combination data ($\mu$, s) which has the mask flag Xmask set to 1 becomes non-selected data that is not stored. In step S123, which follows step S122, the coefficient estimation unit 105 increments a sample counter Cspl by 1.

In step S124, the coefficient estimation unit 105 determines whether the sample counter Cspl is 10 or more. When Cspl is greater than or equal to 10 (step S124: YES), the process proceeds to step S125. When Cspl is not greater than or equal to 10 (step S124: NO), the process proceeds to step S128.

In step S125, the coefficient estimation unit 105 estimates the maximum friction coefficient $\mu$p, which is a local maximum of the friction coefficient $\mu$, by a cubic function approximation. The coefficient estimation unit 105 adds (0, 0) as origin data to a predetermined number of combination data ($\mu$, s) that have been stored, and estimates the maximum friction coefficient $\mu$p by a cubic function approximation. In step S126, which follows step S125, the coefficient estimation unit 105 resets the sample counter Cspl. In step S127, which follows step S126, the coefficient estimation unit 105 erases the stored combination data ($\mu$, s).

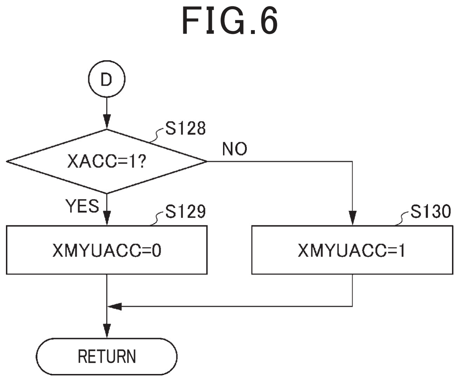

When the processing of step S127 is completed, the process proceeds to step S128 in Fig. 6. The description will be continued with reference to Fig. 6.

In step S128, the limit calculation unit 102 determines whether the acceleration/deceleration determination flag XACC is 1. When the acceleration/deceleration determination flag XACC is 1 (step S128: YES), the process proceeds to step S129. When the acceleration/deceleration determination flag XACC is not 1 (step S128: NO), the process proceeds to step S130.

In step S129, the limit calculation unit 102 sets a previous determination flag XMYUACC to 0. In step S130, the limit calculation unit 102 sets the previous determination flag XMYUACC to 1. When the processing of step S129 or step S130 is completed, the processing returns.

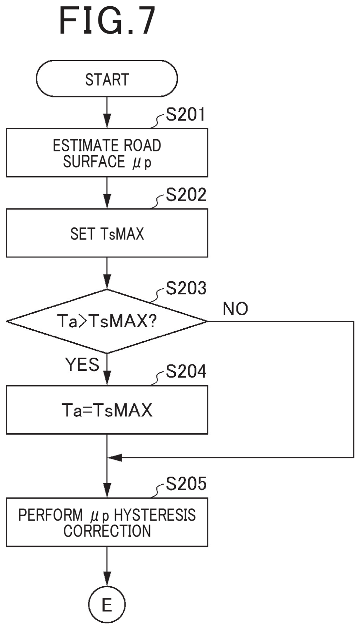

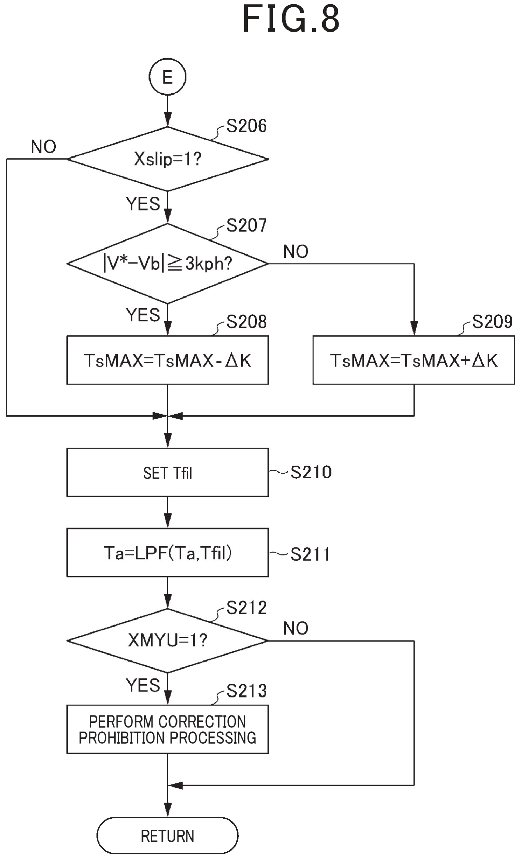

Next, torque restriction according to the maximum friction coefficient $\mu p$ will be described with reference to Figs. 7 and 8. In step S201 in Fig. 7, the maximum friction coefficient $\mu p$ is estimated. The method of estimating the maximum friction coefficient $\mu p$ is as described with reference to Figs. 3, 4, 5, and 6. When the processing of step S201 is completed, the process proceeds to step S202.

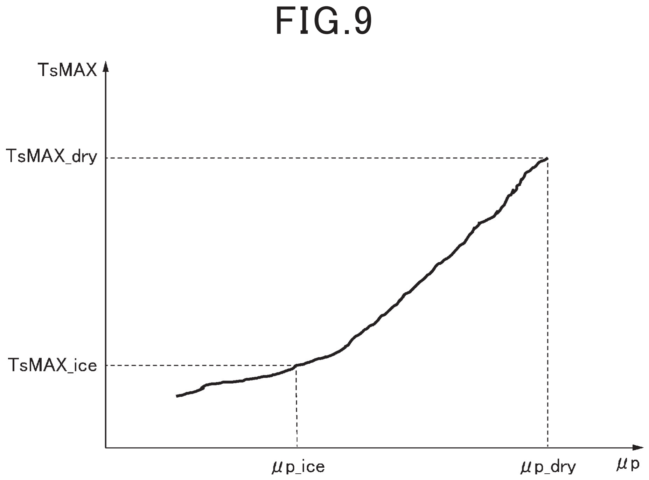

In step S202, the limit calculation unit 102 sets the slip limit torque TsMAX. As shown in Fig. 9, the slip limit torque TsMAX is specified by a correlation with the maximum friction coefficient $\mu p$. For example, a slip limit torque TsMAX_ice corresponds to the maximum friction coefficient $\mu p$_ice for an icy road surface. For example, a slip limit torque TsMAX_dry corresponds to the maximum friction coefficient $\mu p$_dry for a dry road surface. The relationship between $\mu p$ and TsMAX, as illustrated in Fig. 9, is stored as a mapping. When the processing of step S202 is completed, the process proceeds to step S203.

In step S203, the limit calculation unit 102 compares the slip limit torque TsMAX and the accelerator requested torque Ta. When Ta is greater than TsMAX (step S203: YES), the process proceeds to step S204. When Ta is not greater than TsMAX (step S203: NO), the process proceeds to step S205.

In step S204, the limit calculation unit 102 caps the accelerator requested torque Ta such that the slip limit torque TsMAX is the upper limit. When the processing of step S204 is completed, the process proceeds to step S205.

In step S205, the limit calculation unit 102 performs a hysteresis correction on the maximum friction coefficient $\mu p$. The hysteresis correction of the maximum friction coefficient $\mu p$ will be described in detail later. When the process of step S205 is completed, the process proceeds to step S206 in Fig. 8.

In step S206 in Fig. 8, the slip control unit 104 determines whether a slip control flag Xslip is 1. When the slip control flag Xslip is 1 (step S206: YES), the process proceeds to step S207. When the slip control flag Xslip is not 1 (step S206: NO), the process proceeds to step S210.

In step S207, the slip control unit 104 determines whether the current state is an initial slip state. The slip control unit 104 determines whether the current state is an initial slip state based on the difference between the drive wheel speed V* and the vehicle body speed Vb. The drive wheel speed V* indicates the drive wheel speed of the larger slip between the left and right wheels. When |V* - Vb| is greater than or equal to 3 kph (step S207: YES), the processing proceeds to step S208. When |V* - Vb| is not greater than or equal to 3 kph (step S207: NO), the process proceeds to step S209.

In step S208, the limit calculation unit 102 applies a slight downward correction to the slip limit torque TsMAX using the following formula (f101).

$$TsMAX = TsMAX - \Delta K \quad (f101)$$

In step S209, the limit calculation unit 102 applies a slight upward correction to the slip limit torque TsMAX using the following formula (f102).

$$TsMAX = TsMAX + \Delta K \quad (f102)$$

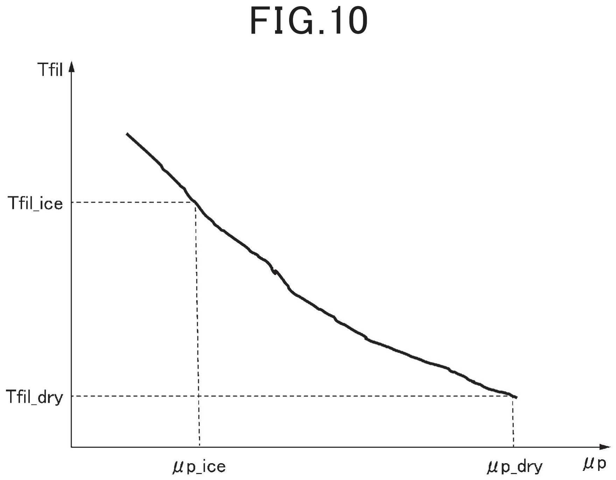

When the processing of step S208 and step S209 is completed, the process proceeds to step S210. In step S210, the limit calculation unit 102 sets a torque filter time constant Tfil. The torque filter time constant Tfil is set according to the estimated maximum friction coefficient $\mu p$. As illustrated in Fig. 10, the relationship between the maximum friction coefficient $\mu p$ and the torque filter time constant Tfil is determined in advance. For example, a torque filter time constant Tfil_ice corresponds to the maximum friction coefficient $\mu p$_ice for an icy road surface. For example, a torque filter time constant Tfil_dry corresponds to the maximum friction coefficient $\mu p$_dry for a dry road surface.

When the processing of step S210 is completed, the process proceeds to step S211. In step S211, the limit calculation unit 102 executes a torque filter correction according to the road surface $\mu$. The limit calculation unit 102 performs a first-order low-pass filter correction using the torque filter time constant Tfil.

When the processing of step S211 is completed, the process proceeds to step S212. In step S212, the limit calculation unit 102 determines whether a slip control prohibition flag XMYU is 1. When the slip control prohibition flag XMYU is 1 (step S212: YES), the process proceeds to step S213. When the slip control prohibition flag XMYU is not 1 (step S212: NO), the processing returns.

In step S213, the limit calculation unit 102 executes correction prohibition processing. Specifically, slip control according to the maximum friction coefficient $\mu p$ is prohibited.

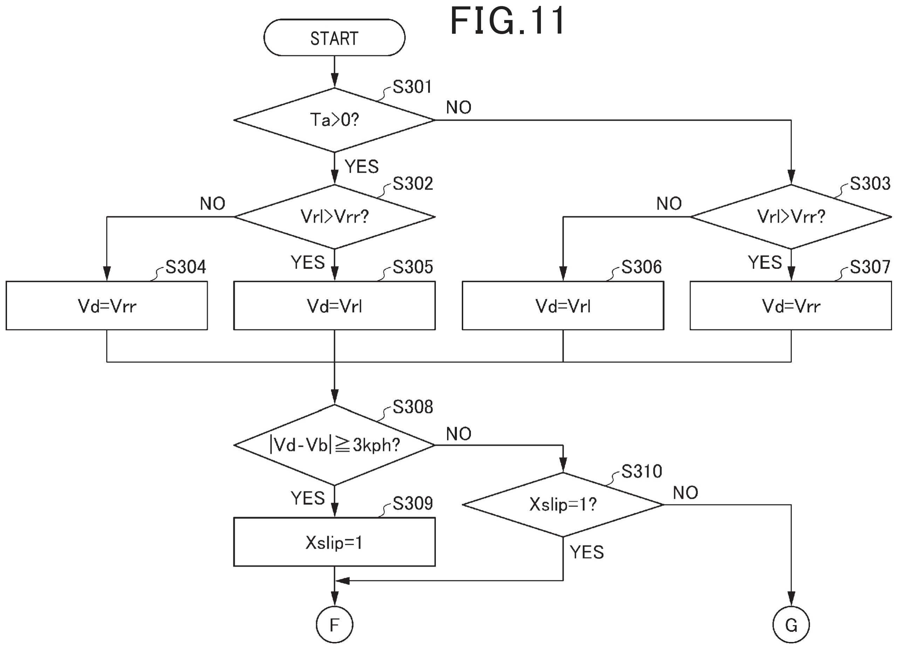

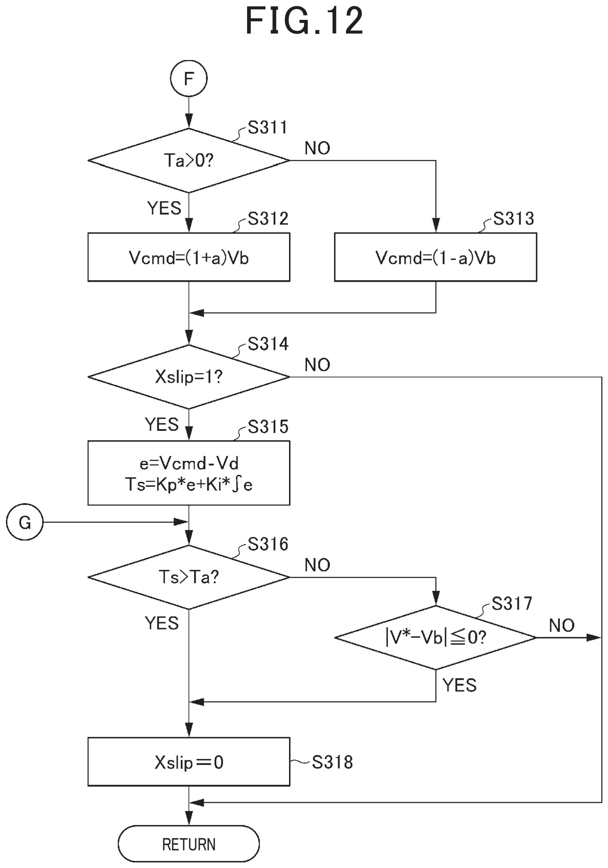

Next, the slip control will be described with reference to Figs. 11 and 12. In step S301 in Fig. 11, the accelerator control unit 101 calculates the accelerator requested torque Ta. The accelerator control unit 101 determines whether the calculated accelerator requested torque Ta is greater than 0. When the accelerator requested torque Ta is greater than 0 (step S301: YES), the state is determined to be an acceleration state, and the process proceeds to step S302. When the accelerator requested torque Ta is not greater than 0 (step S301: NO), the state is determined to be a deceleration state, and the process proceeds to step S303.

In step S302, the slip control unit 104 compares the wheel speed Vrr of the right rear wheel 46RR and the wheel speed Vrl of the left rear wheel 46RL. The slip control unit 104 determines which of the right rear wheel 46RR side and the left rear wheel 46RL side is to be selected as the drive wheel speed. Because step S302 is a determination assuming an acceleration state, the side with the higher wheel speed is selected as the drive wheel speed. When the wheel speed Vrl is greater than the wheel speed Vrr (step S302: YES), the process proceeds to step S305. When the wheel speed Vrl is not greater than the wheel speed Vrr (step S302: NO), the process proceeds to step S304.

In step S304, the slip control unit 104 sets the wheel speed Vrr of the right rear wheel 46RR as the drive wheel speed Vd. In step S305, the slip control unit 104 sets the wheel speed Vrl of the left rear wheel 46RL as the drive wheel speed Vd.

In step S303, the slip control unit 104 compares the wheel speed Vrr of the right rear wheel 46RR and the wheel speed Vrl of the left rear wheel 46RL. The slip control unit 104 determines which of the right rear wheel 46RR side and the left rear wheel 46RL side is to be selected as the drive wheel speed. Because step S303 is a determination assuming a deceleration state, the side with the lower wheel speed is selected as the drive wheel speed. When the wheel speed Vrl is greater than the wheel speed Vrr (step S303: YES), the process proceeds to step S307. When the wheel speed Vrl is not greater than the wheel speed Vrr (step S303: NO), the process proceeds to step S306.

In step S307, the slip control unit 104 sets the wheel speed Vrr of the right rear wheel 46RR as the drive wheel speed Vd. In step S306, the slip control unit 104 sets the wheel speed Vrl of the left rear wheel 46RL as the drive wheel speed Vd.

When the processing of step S304, step S305, step S306, and step S307 is completed, and the drive wheel speed Vd is calculated, the process proceeds to step S308.

In step S308, the slip control unit 104 determines whether to start slip control. The slip control unit 104 determines that slip control is to be started when the absolute value of the difference between the drive wheel speed Vd and the vehicle body speed Vb becomes 3 kph or more. When |Vd - Vb| is greater than or equal to 3 kph (step S308: YES), the process proceeds to step S309. When |Vd - Vb| is not greater than or equal to 3 kph (step S308: NO), the process proceeds to step S310.

Note that in the case of a two-wheel drive vehicle as illustrated in Fig. 1, the driven wheel speed is used as the vehicle body speed Vb. Therefore, the driven wheel speed is calculated from the wheel speed of the right front wheel 46FR and the wheel speed of the left front wheel 46FL, and is used as the vehicle body speed Vb.

In step S309, the slip control unit 104 sets the slip control flag Xslip to 1, and the process proceeds to step S311 in Fig. 12.

In step S310, the slip control unit 104 determines whether the slip control flag Xslip is 1. When the slip control flag Xslip is 1 (step S310: YES), the process proceeds to step S311 in Fig. 12. When the slip control flag Xslip is not 1 (step S310: NO), the process proceeds to step S316 in Fig. 12.

In step S311 in Fig. 12, the slip control unit 104 determines whether the accelerator requested torque Ta is greater than 0. When the accelerator requested torque Ta is greater than 0 (step S311: YES), the state is determined to be an acceleration state, and the process proceeds to step S312. When the accelerator requested torque Ta is not greater than 0 (step S311: NO), the state is determined to be a deceleration state, and the process proceeds to step S313.

In step S312, the slip control unit 104 calculates a target slip speed Vcmd using the following formula (f201).

$$ Vcmd = (1 + a) \times Vb \quad (f201) $$

Vb is the vehicle body speed. a is a numerical value obtained from the slip ratio corresponding to the maximum friction coefficient μp. The μ-s characteristic curve differs for an icy road and a snow-packed road. In the present embodiment, because the maximum friction coefficient μp has already been estimated, the slip ratio s corresponding to the estimated maximum friction coefficient μp can be specified. The numerical value a is a value corresponding to the specified slip ratio s, and for example, if the slip ratio s is 3%, a is 0.03.

In step S313, the slip control unit 104 calculates the target slip speed Vcmd using the following formula (f202).

$$ Vcmd = (1 - a) \times Vb \quad (f202) $$

Vb is the vehicle body speed. a is a numerical value obtained from the slip ratio corresponding to the maximum friction coefficient μp. Since a has already been described in formula (f201), the explanation is omitted here.

When the target slip speed Vcmd is calculated in step S312 and step S313, the process proceeds to step S314. In step S314, the slip control unit 104 determines whether the slip control flag Xslip is 1. When the slip control flag Xslip is 1 (step S314: YES), the process proceeds to step S315. When the slip control flag Xslip is not 1 (step S314 NO), the processing returns from the routine.

In step S315, the slip control unit 104 sets the slip torque Ts. The slip control unit 104 performs PI_FB control so that the drive wheel speed Vd becomes the target slip speed Vcmd, and sets the slip torque Ts.

The slip control unit 104 calculates a speed deviation e using the following formula (f203).

$$ e = Vcmd - Vd \quad (f203) $$

The slip control unit 104 calculates the slip torque Ts using the following formula (f204).

$$Ts = Kp \times e + Ki \times \int e \quad (f204)$$

In formula (f204), Kp is a proportional gain that is set in advance. In formula (f204), Ki is an integral gain that is set in advance. The slip control unit 104 limits the slip torque Ts to a range from a lower limit value Tmin to an upper limit value Tmax using the following formula (f205). The lower limit value Tmin and the upper limit value Tmax are set in advance.

$$Tmin < Ts < Tmax \quad (f205)$$

When the processing of step S315 is completed, the process proceeds to step S316. In step S316, the slip control unit 104 compares the slip torque Ts and the accelerator requested torque Ta to determine whether the slip control is completed. When Ts is greater than Ta (step S316: YES), it is determined that the slip control is completed, and the process proceeds to step S318. When Ts is not greater than Ta (step S316: NO), the process proceeds to step S317.

In step S317, the slip control unit 104 determines whether the slip state has been resolved. When |V* - Vb| is less than or equal to 0 (step S317: YES), it is determined that the slip state has been resolved, and the process proceeds to step S318. When |V* - Vb| is not less than or equal to 0 (step S317: NO), the process ends, and the processing returns.

In step S318, the slip control unit 104 updates the slip control flag Xslip to 0.

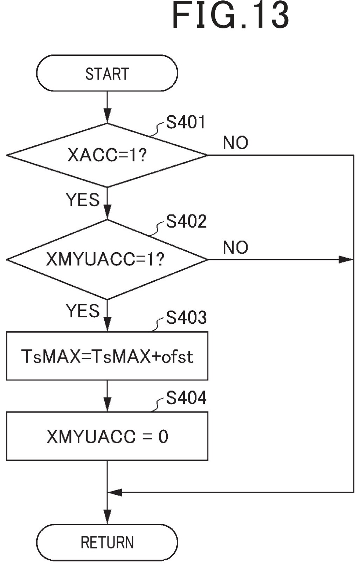

Next, the hysteresis correction of the maximum friction coefficient μp and the slip limit torque TsMAX will be described with reference to Fig. 13. In step S401 in Fig. 13, the limit calculation unit 102 determines whether the acceleration/deceleration determination flag XACC is 1. When the acceleration/deceleration determination flag XACC is 1, it is determined that acceleration is occurring (step S401: YES), and the process proceeds to step S402. When the acceleration/deceleration determination flag XACC is not 1, it is determined that deceleration is occurring (step S401: NO), and the processing returns.

In step S402, the limit calculation unit 102 determines whether the previous determination flag XMYUACC is 1. When the previous determination flag XMYUACC is 1, it is determined that acceleration occurred the previous time (step S402: YES), and the process proceeds to step S403. When the acceleration/deceleration determination flag XACC is not 1, it is determined that acceleration occurred the previous time (step S402: NO), and the processing returns.

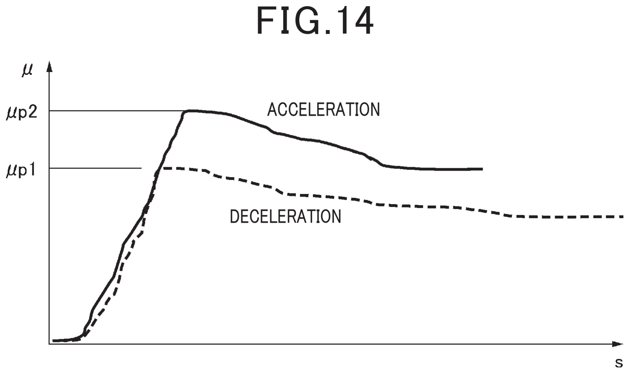

In step S403, the limit calculation unit 102 performs hysteresis correction on the slip limit torque TsMAX. As shown in Fig. 14, the μ-s characteristic curve differs during acceleration and during deceleration. In the present embodiment, because the maximum friction coefficient μp has already been estimated, the slip ratio s corresponding to the estimated maximum friction coefficient μp can be specified. The maximum friction coefficient during acceleration μp2 is larger than the maximum friction coefficient during deceleration μp1 for the same slip ratio s.

As shown in Fig. 9, because the slip limit torque TsMAX is specified by the correlation with the maximum friction coefficient μp, the slip limit torque TsMAX during acceleration becomes larger than the slip limit torque TsMAX during deceleration.

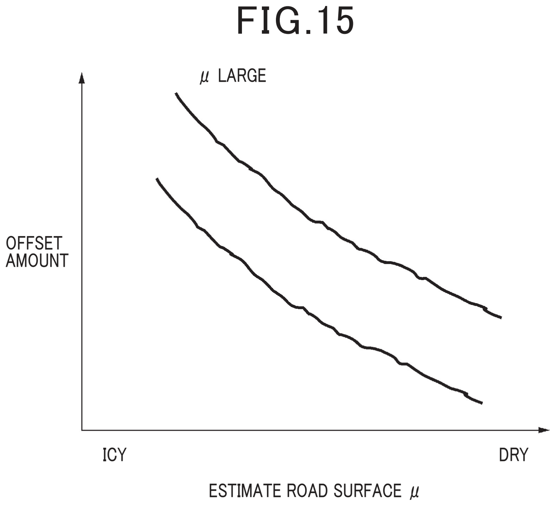

As shown in Fig. 15, an offset amount ofst is specified by a correlation with the road surface μ. The offset amount ofst is an amount by which the slip limit torque TsMAX during deceleration and the slip limit torque TsMAX during acceleration are corrected. The offset amount ofst may be changed, for example, to the "μ large" curve in Fig. 15, according to the gradient, drive system such as FWD, RWD, and AWD, weight, and the like. The coefficient estimation unit 105 estimates the offset amount ofst.

The limit calculation unit 102 performs hysteresis correction on the slip limit torque TsMAX using the following formula (f301).

$$TsMAX = TsMAX + ofst \quad (f301)$$

When the processing of step S403 is completed, the process proceeds to step S404. In step S404, the limit calculation unit 102 sets the previous determination flag XMYUACC to 0. When the processing of step S404 is completed, the processing returns.

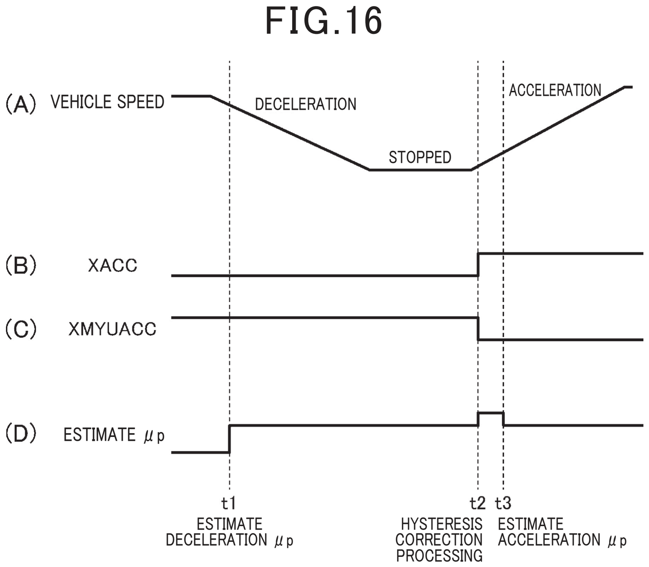

Fig. 16 shows the relationship between the vehicle speed and the maximum friction coefficient in a timing chart. As shown in Fig. 16, from time t1 when deceleration starts until the vehicle stops, the limit calculation unit 102 estimates the maximum friction coefficient μp. The acceleration/deceleration determination flag XACC is 0, and the previous determination flag XMYUACC is 1. At time t2, when starting to move, because the estimation of μp during acceleration is not completed in time, the maximum friction coefficient μp that has been subjected to hysteresis correction and the slip limit torque TsMAX are used. At time t3, because the estimation of μp during acceleration is completed, the estimated maximum friction coefficient μp and the slip limit torque TsMAX are used.

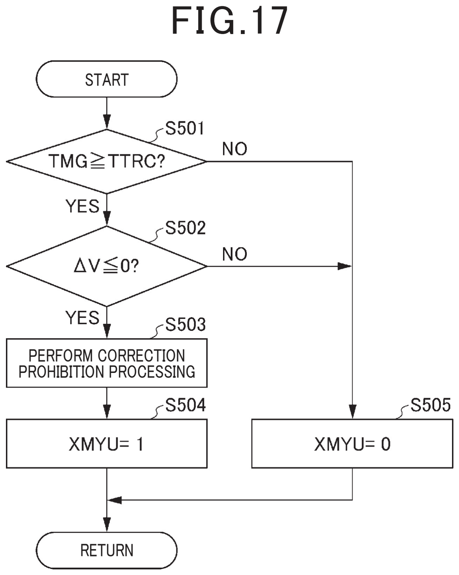

Next, slip control prohibition according to the road surface gradient will be described with reference to Fig. 17. In step S501, the target-setting unit 103 determines whether an MG target final torque TMG is greater than or equal to a slip control target torque TTRC. The slip control target torque TTRC is the target torque output by the slip control unit 104 as a result of the slip control.

When the MG target final torque TMG is greater than or equal to the slip control target torque TTRC (step S501: YES), the process proceeds to step S502. When the MG target final torque TMG is not greater than or equal to the slip control target torque TTRC (step S501: NO), the process proceeds to step S505.

In step S502, the target-setting unit 103 determines whether the vehicle body acceleration $\Delta V$ is 0 or less. When the vehicle body acceleration $\Delta V$ is less than or equal to 0 (step S502: YES), the process proceeds to step S503. When the vehicle body acceleration $\Delta V$ is not less than or equal to 0 (step S502: NO), the process proceeds to step S505.

In step S503, the target-setting unit 103 executes correction prohibition processing. When the correction prohibition processing is executed, slip control is prohibited. When the processing of step S503 is completed, the process proceeds to step S504.

In step S504, the target-setting unit 103 sets the slip control prohibition flag XMYU to 1. In step S505, the target-setting unit 103 sets the slip control prohibition flag XMYU to 0. When the processing of step S504 and step S505 is completed, the processing returns.

[Supplementary Notes] The following supplementary notes 1 to 7 can be arbitrarily combined as long as no technical contradiction occurs.

[Supplementary Note 1]

A control device 10 including:

a coefficient estimation unit 105 that estimates a maximum friction coefficient $\mu$p of a drive wheel with respect to a road surface when a mobile body travels causes the drive wheel to rotate and travels on the road surface;
a limit calculation unit 102 that calculates a torque upper limit that drives the drive wheel according to the estimated maximum friction coefficient $\mu$p; and
a target-setting unit 103 that sets a target torque that drives the drive wheel so as not to exceed the torque upper limit.

According to supplementary note 1, because the torque upper limit is calculated by estimating the maximum friction coefficient $\mu$p, it becomes possible to perform drive wheel control using the maximum friction coefficient $\mu$p.

[Supplementary Note 2]

The control device 10 according to supplementary note 1, in which
the coefficient estimation unit 105 estimates an acceleration friction coefficient, which is a maximum friction coefficient when the mobile body accelerates, and a deceleration friction coefficient, which is a maximum friction coefficient when the mobile body decelerates.

According to supplementary note 2, because the acceleration friction coefficient and the deceleration friction coefficient are estimated, the maximum friction coefficient $\mu$p can be estimated during both acceleration and deceleration, which enables drive wheel control using the maximum friction coefficient $\mu$p in the case of both acceleration and deceleration.

[Supplementary Note 3]

The control device 10 according to supplementary note 2, in which
the limit calculation unit 102 calculates the torque upper limit according to the acceleration friction coefficient or the deceleration friction coefficient most recently estimated by the coefficient estimation unit 105.

According to supplementary note 3, for example, because the deceleration friction coefficient estimated during deceleration can be used as the maximum friction coefficient $\mu$p at the time of transmission, even when the estimation of the maximum friction coefficient $\mu$p is not completed when starting to move, optimal acceleration and stability according to the road surface friction coefficient $\mu$ can be obtained.

[Supplementary Note 4]

The control device 10 according to supplementary note 3, in which

the coefficient estimation unit 105 estimates an offset amount corresponding to a difference between the acceleration friction coefficient and the deceleration friction coefficient, and
the limit calculation unit 102, when calculating the torque upper limit according to the deceleration friction coefficient, adds the offset amount to the deceleration friction coefficient.

According to supplementary note 4, because the offset amount corresponding to the difference between the acceleration friction coefficient and the deceleration friction coefficient is estimated, and the offset amount is added to the deceleration friction coefficient to calculate the torque upper limit, the maximum friction coefficient $\mu$p can be estimated with higher accuracy.

[Supplementary Note 5]

The control device 10 according to any one of supplementary notes 1 to 4, in which
the limit calculation unit 102 varies the torque upper limit according to at least one of a gradient of a road surface on which the mobile body travels, a drive system of the mobile body, and a weight of the mobile body.

[Supplementary Note 6]

The control device according to any one of supplementary notes 1 to 4, in which

the target-setting unit 103 does not perform a setting of the target torque based on the torque upper limit when the mobile body cannot accelerate.

[Supplementary Note 7]

A program including instructions that cause a control device to perform a process, the process including:

estimating a maximum friction coefficient of a drive wheel with respect to a road surface when a mobile body travels causes the drive wheel to rotate and travels on the road surface;
calculating a torque upper limit for driving the drive wheel according to the estimated maximum friction coefficient; and
setting a target torque that drives the drive wheel so as not to exceed the torque upper limit.

The control units and methods thereof described in the present disclosure may be realized by a dedicated computer provided by configuring a processor and memory programmed to execute one or more functions implemented by a computer program. Alternatively, the control units and methods thereof described in the present disclosure may be realized by a dedicated computer provided by configuring a processor with one or more dedicated hardware logic circuits. Alternatively, the control units and methods thereof described in the present disclosure may be realized by one or more dedicated computers configured by a combination of a processor and memory programmed to execute one or more functions, and a processor configured by one or more hardware logic circuits. Furthermore, the computer program may be stored as instructions executed by a computer on a computer-readable non-transitory tangible recording medium.

The present embodiment has been described above with reference to specific examples. However, the present disclosure is not limited to these specific examples. As long as the features of the present disclosure are provided, the scope of the present disclosure includes specific examples in which design changes are made as necessary by those skilled in the art. The elements included in each of the specific examples described above, their arrangement, conditions, shapes, and the like, are not limited to those that have been illustrated, and can be modified as appropriate. The elements included in each of the specific examples described above can be appropriately combined as long as no technical contradiction occurs.

**Claims**

1. A control device comprising:

a coefficient estimation unit (105) that estimates a maximum friction coefficient of a drive wheel with respect to a road surface when a mobile body causes the drive wheel to rotate and travels on the road surface;
a limit calculation unit (102) that calculates a torque upper limit for driving the drive wheel according to the estimated maximum friction coefficient; and
a target-setting unit (103) that sets a target torque to drive the drive wheel so as not to exceed the torque upper limit.

2. The control device according to claim 1, wherein the coefficient estimation unit estimates an acceleration friction coefficient, which is a maximum friction coefficient when the mobile body accelerates, and a deceleration friction coefficient, which is a maximum friction coefficient when the mobile body decelerates.

3. The control device according to claim 2, wherein the limit calculation unit calculates the torque upper limit according to the acceleration friction coefficient or the deceleration friction coefficient most recently estimated by the coefficient estimation unit.

4. The control device according to claim 3, wherein

the coefficient estimation unit estimates an offset amount corresponding to a difference between the acceleration friction coefficient and the deceleration friction coefficient, and
the limit calculation unit, when calculating the torque upper limit according to the deceleration friction coefficient, adds the offset amount to the deceleration friction coefficient.

5. The control device according to any one of claims 1 to 4, wherein
the limit calculation unit varies the torque upper limit according to at least one of a gradient of a road surface on which the mobile body travels, a drive system of the mobile body, and a weight of the mobile body.

6. The control device according to any one of claims 1 to 4, wherein
the target-setting unit does not perform a setting of the target torque based on the torque upper limit when the mobile body cannot accelerate.

7. A program comprising instructions that cause a control device to perform a process, the process comprising:

estimating a maximum friction coefficient of a drive wheel with respect to a road surface when a mobile body travels causes the drive wheel to rotate and travels on the road surface;

calculating a torque upper limit for driving the drive wheel according to the estimated maximum friction coefficient; and

setting a target torque that drives the drive wheel so as not to exceed the torque upper limit.

# FIG.1

# FIG.2

# FIG.3

EP 4 685 024 A1

```
            START

            │
            ▼                    S101
         ╱Ta>0?╲  ──NO──────────────────────┐
         ╲      ╱                            │
           YES│                              │
              ▼  S102                        ▼  S103
        ┌──────────┐                   ┌──────────┐
        │ XACC=1   │                   │ XACC=0   │
        └──────────┘                   └──────────┘
              │                              │
              ▼  S104                        ▼  S105
   NO    ╱Vrl>Vrr?╲              NO    ╱Vrl>Vrr?╲
  ┌──────╲        ╱            ┌──────╲        ╱
  │        YES│                │        YES│
  ▼ S106      ▼ S107           ▼ S108      ▼ S109
┌─────────┐ ┌─────────┐     ┌─────────┐ ┌─────────┐
│S=(Vrr-Vb)│ │S=(Vrl-Vb)│   │S=(Vrl-Vb)│ │S=(Vrr-Vb)│
│  /Vb    │ │  /Vb    │     │  /Vb    │ │  /Vb    │
└─────────┘ └─────────┘     └─────────┘ └─────────┘
```

$$S=(Vrr-Vb)/Vb \quad S=(Vrl-Vb)/Vb \quad S=(Vrl-Vb)/Vb \quad S=(Vrr-Vb)/Vb$$

S110

$$\mu = Fx/Fz$$

Ⓐ

# FIG.4

(A)

S111 Ta>0? — NO → S113 ΔS≦0? — NO → (B)

YES

S112 ΔS≧0? — NO → YES (S113 YES path)

(B) → YES

S114 |S|<Mx? — NO →

YES

S115 |μ|>Pd? — NO →

YES

S116 Vd>1kph? — NO →

YES

S117 |STEERING ANGLE| < Ps? — NO →

YES

S118 Xmask=0

S119 Xmask=1

(C)

# FIG.5

# FIG.6

```
        ┌───┐
        │ D │
        └───┘
          │
          ▼
      ╱───────╲         S128
     ╱  XACC=1? ╲──────── NO ──────────┐
      ╲         ╱                       │
       ╲───────╱                        │
          │                             │
        YES│                            │
          ▼         S129                ▼         S130
    ┌──────────────┐            ┌──────────────┐
    │  XMYUACC=0   │            │  XMYUACC=1   │
    └──────────────┘            └──────────────┘
          │                             │
          ▼◄────────────────────────────┘
    ┌──────────────┐
    │   RETURN     │
    └──────────────┘
```

# FIG.7

```
                    START

                          ⌐S201
        ┌──────────────────────┐
        │   ESTIMATE ROAD      │
        │   SURFACE μp         │
        └──────────────────────┘

                          ⌐S202
        ┌──────────────────────┐
        │     SET TsMAX        │
        └──────────────────────┘

                          ⌐S203
              ◇                        NO
         Ta>TsMAX?
              ◇

         YES │    ⌐S204
        ┌──────────────────────┐
        │     Ta=TsMAX         │
        └──────────────────────┘


                          ⌐S205
        ┌──────────────────────┐
        │ PERFORM μp HYSTERESIS│
        │     CORRECTION       │
        └──────────────────────┘

                    E
```

# FIG.8

# FIG.9

# FIG.10

# FIG.11

# FIG.12

```
                    ( F )
                      │
                      ▼
              ╱─────────────╲      S311
             ╱   Ta>0?        ╲──────── NO ──────────┐
             ╲               ╱                        │
              ╲─────────────╱                         │
                  │ YES                               │
                  ▼  S312                             ▼  S313
         ┌──────────────────┐              ┌──────────────────┐
         │  Vcmd=(1+a)Vb    │              │  Vcmd=(1-a)Vb    │
         └──────────────────┘              └──────────────────┘
                  │                                   │
                  │◄──────────────────────────────────┘
                  ▼
              ╱─────────────╲      S314
             ╱  Xslip=1?     ╲──────── NO ───────────────────────────┐
             ╲               ╱                                        │
              ╲─────────────╱                                         │
                  │ YES  S315                                         │
                  ▼                                                   │
         ┌──────────────────┐                                        │
         │   e=Vcmd-Vd      │                                        │
         │  Ts=Kp*e+Ki*∫e   │                                        │
         └──────────────────┘                                        │
                  │                                                   │
     ( G )───────►│                                                   │
                  ▼                                                   │
              ╱─────────────╲      S316                               │
             ╱   Ts>Ta?      ╲──────── NO ──────┐                     │
             ╲               ╱                   │                     │
              ╲─────────────╱                    ▼    S317            │
                  │ YES               ╱─────────────╲                 │
                  │                  ╱  |V*-Vb|≦0?   ╲──── NO ────────┤
                  │                  ╲               ╱                 │
                  │                   ╲─────────────╱                 │
                  │                        │ YES                      │
                  │◄───────────────────────┘                          │
                  ▼                                                    │
         ┌──────────────────┐                                        │
         │    Xslip=0       │─── S318                                │
         └──────────────────┘                                        │
                  │                                                   │
                  │◄──────────────────────────────────────────────────┘
                  ▼
            ╭───────────╮
            │  RETURN   │
            ╰───────────╯
```

# FIG.13

START

S401
XACC=1? —NO→

YES ↓

S402
XMYUACC=1? —NO→

YES ↓

S403
TsMAX=TsMAX+ofst

S404
XMYUACC = 0

RETURN

# FIG.14

# FIG.15

$\mu$ LARGE

OFFSET
AMOUNT

ICY

DRY

ESTIMATE ROAD SURFACE $\mu$

# FIG.16

(A) VEHICLE SPEED

DECELERATION

ACCELERATION

STOPPED

(B) XACC

(C) XMYUACC

(D) ESTIMATE $\mu$p

t1
ESTIMATE
DECELERATION $\mu$p

t2
HYSTERESIS
CORRECTION
PROCESSING

t3
ESTIMATE
ACCELERATION $\mu$p

# FIG.17

START

S501
TMG ≧ TTRC?
NO
YES

S502
△V ≦ 0?
NO
YES

S503
PERFORM CORRECTION
PROHIBITION PROCESSING

S504
XMYU= 1

S505
XMYU= 0

RETURN

**EP 4 685 024 A1**

## INTERNATIONAL SEARCH REPORT

<table>
<tr><td colspan="2">International application No.</td></tr>
<tr><td colspan="2">**PCT/JP2024/003236**</td></tr>
</table>

| A. | CLASSIFICATION OF SUBJECT MATTER |
|---|---|

*B60W 30/02*(2012.01)i; *B60L 15/20*(2006.01)i
FI:   B60W30/02; B60L15/20 Y

According to International Patent Classification (IPC) or to both national classification and IPC

| B. | FIELDS SEARCHED |
|---|---|

Minimum documentation searched (classification system followed by classification symbols)

B60W30/02; B60L15/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2013/076902 A1 (NISSAN MOTOR CO., LTD.) 30 May 2013 (2013-05-30) paragraphs [0021]-[0042], [0052]-[0059], fig. 4, 12-14 | 1-3, 7 |
| A | | 4-6 |
| A | JP 2008-037184 A (TOYOTA JIDOSHA KABUSHIKI KAISHA) 21 February 2008 (2008-02-21) entire text, all drawings | 1-7 |
| A | JP 2006-341656 A (NISSAN MOTOR CO., LTD.) 21 December 2006 (2006-12-21) entire text, all drawings | 1-7 |

☐ Further documents are listed in the continuation of Box C.        ☑ See patent family annex.

| | |
|---|---|
| *   Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **01 April 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

30

## INTERNATIONAL SEARCH REPORT
### Information on patent family members

International application No.

**PCT/JP2024/003236**

| Patent document cited in search report | | | Publication date (day/month/year) | Patent family member(s) | Publication date (day/month/year) |
|---|---|---|---|---|---|
| WO | 2013/076902 | A1 | 30 May 2013 | (Family: none) | |
| JP | 2008-037184 | A | 21 February 2008 | (Family: none) | |
| JP | 2006-341656 | A | 21 December 2006 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023044631 A

- JP H0219622 A